# EUROPEAN PATENT APPLICATION

(11) **EP 4 825 641 A1**
(43) Date of publication of application: **21.10.2026**
(21) Application number: 26171419.0
(22) Date of filing: 09.04.2026
(51) Int. Cl.: B60L 53/16, B60L 53/18, H01R 13/52, H01R 13/62

(54) **CHARGING DOCK FOR ELECTRIC VEHICLE AND CABLE ASSEMBLY**

(30) Priority: 14.04.2025 CN 202520699291 U
(71) Applicant: Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Qiu, Kan, Suzhou, 215026 (CN); Shang, Yujin, Suzhou, 32 215123 (CN); Zhang, Guanhua, Shanghai, 200233 (CN); Zhang, Xiaokang, Shanghai, 200233 (CN)
(74) Representative: Grünecker Patent- und Rechtsanwälte PartG mbB

(57) **Abstract**

The present application discloses a charging dock for an electric vehicle and a cable assembly comprising the charging dock and a cable connected to the charging dock. The charging dock comprises: a housing provided with a port for accommodating charging terminals, the port being provided with a boss on an inner wall thereof; a cover configured to be mounted on the port; a magnetic component disposed on one of the boss and the cover; and a metal component, which is disposed on the other of the boss and the cover, so that the cover is mounted on the port with an assistance of a magnetic attraction force between the magnetic component and the metal component. There is no need to mount a sealing ring on a side wall of the cover to achieve an interference fit between the sealing ring and a side wall of the port so as to mount the cover on the port, thereby avoiding regular replacement of the cover or the sealing ring, and improving the durability of the charging dock.

## Description

### CROSS-REFERENCE TO RELATED APPLICATION

This application claims the priority of Chinese Application No. 202520699291.1 filed on April 14, 2025 and entitled "Charging Dock for Electric Vehicle and Cable Assembly", the whole disclosure of which is incorporated herein by reference.

### Field of the Disclosure

The present application relates to the field of new energy vehicles, and more particularly to a charging dock for an electric vehicle and a cable assembly comprising the charging dock and a cable connected to the charging dock.

### Description of the Related Art

In existing electric vehicles, there is a need to mount a dustproof cover on a charging port of a charging dock to prevent dust, water, and the like from contaminating the charging port, thereby avoiding abnormality of a charging function. In order to make the dustproof cover more firmly mounted on the charging port, it is necessary to form a certain holding force between the dustproof cover and the charging port when the dustproof cover is inserted into the charging port and when the dustproof cover is pulled out or removed from the charging port. To this end, a sealing ring is usually mounted on a side wall of the dustproof cover so as to achieve an interference fit between the sealing ring and a side wall of the charging port. However, the interference fit usually results in deformation of the dustproof cover or wear of the sealing ring after a large number of insertions and removals of the cover, and the dustproof cover or the sealing ring has to be replaced regularly, which increases the usage cost of the electric vehicle.

Therefore, there is an urgent need to provide a charging dock that may be durable and has a lower usage cost.

### SUMMARY

The present application aims to provide a charging dock that may be durable and has a lower usage cost.

According to one aspect of the present application, there is provided a charging dock for an electric vehicle, comprising: a housing provided with a port for accommodating charging terminals, the port being provided with a boss on an inner wall thereof; a cover configured to be mounted on the port; a magnetic component disposed on one of the boss and the cover; and a metal component disposed on the other of the boss and the cover, so that the cover is mounted on the port with an assistance of a magnetic attraction force between the magnetic component and the metal component.

According to one aspect of the present application, the cover is provided with a lug, and one of the magnetic component and the metal component is disposed on the lug.

According to one aspect of the present application, the lug is provided with a groove on its side facing the boss for accommodating the one of the magnetic component and the metal component.

According to one aspect of the present application, the other of the magnetic component and the metal component is disposed on and protrudes from a top surface of the boss.

According to one aspect of the present application, the groove is configured to have a depth at which the magnetic component and the metal component abut against each other within the groove.

According to one aspect of the present application, the side of the lug facing the boss is configured to be form-fitted with the top surface of the boss.

According to one aspect of the present application, the port comprises: a first port provided with two first bosses respectively arranged on opposite sides of an inner wall thereof; and a second port provided with two second bosses respectively arranged on opposite sides of an inner wall thereof, wherein the metal component is disposed on each of the two first bosses and the two second bosses.

According to one aspect of the present application, the cover comprises: a first cover configured to be mounted on the first port and provided with two first lugs respectively arranged on opposite sides thereof; and a second cover configured to be mounted on the second port and provided with two second lugs respectively arranged on opposite sides thereof, wherein the magnetic component is disposed in the groove of each of the two first lugs and the two second lugs.

According to one aspect of the present application, the magnetic component comprises a neodymium-iron-boron magnet.

According to another aspect of the present application, there is provided a cable assembly comprising the charging dock according to any one of the above aspects and a cable connected to the charging dock.

### BRIEF DESCRIPTION OF THE DRAWINGS

The accompanying drawings, which are incorporated herein and form a part of the specification, illustrate the present application and further serve to explain the principles of the present application together with the description and to enable those skilled in the related art to make and use the embodiments described herein.
FIG. 1 is a front view of a charging dock according to an embodiment of the present application;
FIG. 2 is a perspective view of the charging dock in FIG. 1 with a first cover and a second cover removed, showing metal components in a first port and a second port;
FIG. 3 is a perspective view of the charging dock in FIG. 1 with the first cover and the second cover removed, showing the metal components disposed in the first port and the second port and magnetic components abutting against the metal components;
FIG. 4 is a bottom view of the first cover in FIG. 1, showing a groove of the first cover;
FIG. 5 is a bottom view of the second cover of FIG. 1, showing a groove of the second cover; and
FIG. 6 is an enlarged view of a portion of the cross-section taken along a line VI-VI in FIG. 1, showing the metal component and the magnetic component abutting against each other in the groove of the second cover.

Features of the present application will become more apparent from the detailed description set forth below when taken in conjunction with the drawings, wherein similar reference numbers always indicate corresponding elements. In the drawings, similar reference numbers generally indicate identical, functionally similar, and/or structurally similar elements. Unless otherwise stated, the figures provided throughout the present application should not be interpreted as drawings drawn to scale.

### DETAILED DESCRIPTION OF EXEMPLARY EMBODIMENTS

In order to make the objectives, technical solutions, and advantages of the present application clearer, the following further describes the present application in detail with reference to specific embodiments and the accompanying drawings.

However, it should be understood that these descriptions are only exemplary and are not intended to limit the scope of the present application. In the following detailed description, for purposes of explanation, numerous specific details are set forth in order to provide a thorough understanding of the embodiments of the present application. However, it may be evident that one or more embodiments may be practiced without these specific details. In addition, in the following description, descriptions of well-known structures and techniques are omitted to avoid unnecessarily obscuring the concepts of the present application.

The terminology used herein is only for the purpose of describing specific embodiments, and is not intended to be limiting of the present application. The terms "comprise", "include" and the like used herein indicate the existence of the features, steps, operations and/or components, but do not exclude the existence or addition of one or more other features, steps, operations or components.

When an expression such as "at least one of A, B, and C, etc." is used, it should generally be interpreted according to the meaning of the expression commonly understood by those skilled in the art (for example, "a system having at least one of A, B, and C" should be interpreted as comprising but not being limited to a system having A alone; a system having B alone; a system having C alone; a system having A and B; a system having A and C; a system having B and C; and/or a system having A, B, and C).

All terms (comprising technical and scientific terms) used herein have meanings commonly understood by those skilled in the art, unless otherwise defined. It should be noted that the terms used herein should be interpreted as having meanings consistent with the context of this specification, and should not be interpreted in an idealized or overly rigid manner.

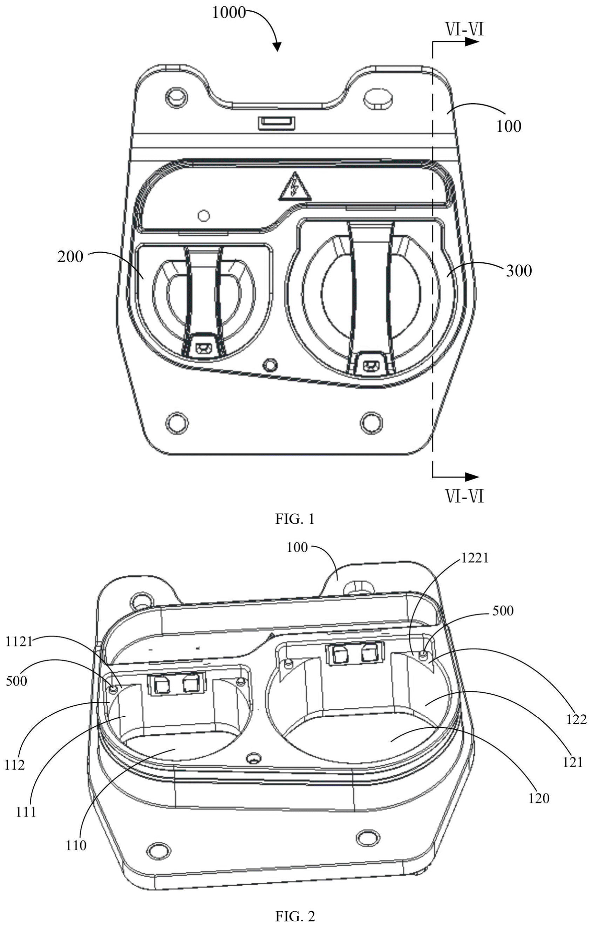

Referring to FIGS. 1-6, the present application discloses a charging dock 1000 for an electric vehicle and a cable assembly (not shown) comprising the charging dock 1000 and a cable connected to the charging dock 1000.

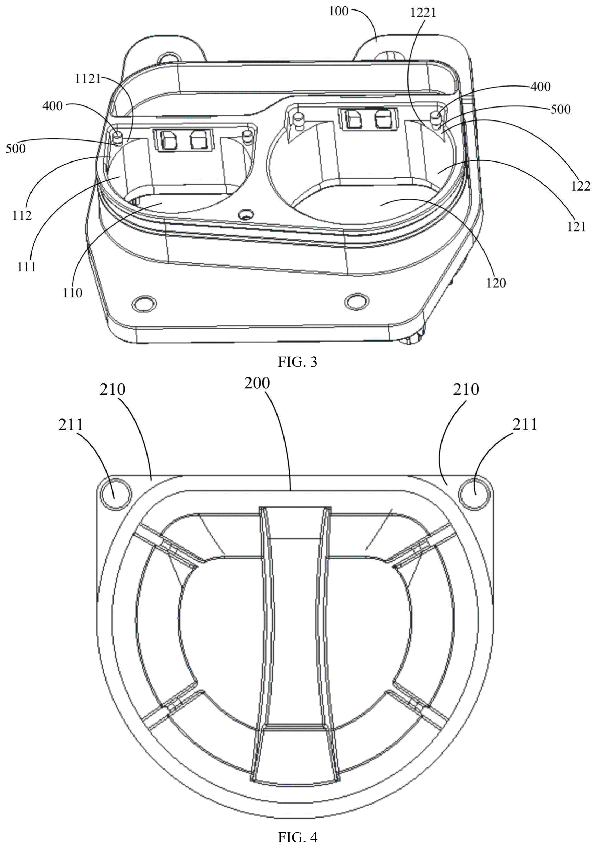

The charging dock 1000 comprises a housing 100, a first cover 200, a second cover 300, a magnetic component 400 and a metal component 500. The magnetic component 400 comprises, but is not limited to, a neodymium-iron-boron magnet. The housing 100 is provided with a first port 110 for accommodating AC charging terminals and a second port 120 for accommodating DC charging terminals. The first port 110 is provided with a first boss 112 on an inner wall 111 thereof, and the second port 120 is provided with a second boss 122 on an inner wall 121 thereof (see FIGS. 2 and 3).

Referring to FIG. 4, the first cover 200 is configured to be mounted on the first port 110, and two first lugs 210 are respectively arranged on opposite sides of the first cover 200. One of the magnetic component 400 and the metal component 500 is disposed on each of the two first lugs 210. The other of the magnetic component 400 and the metal component 500 is disposed on a top surface 1121 of the first boss 112 and protrudes from the top surface 1121 (see FIGS. 2 and 3), so that an abutment may be established between the magnetic component 400 and the metal component 500. Each of the two first lugs 210 is provided with a groove 211 on its side facing the first boss 112 for accommodating one of the magnetic component 400 and the metal component 500. The side of the first lug 210 facing the first boss 112 is configured to be form-fitted with the top surface 1121 of the first boss 112, which facilitates mounting the first cover 200 into the first port 110 and establishing the abutment between the magnetic component 400 and the metal component 500.

Although FIG. 4 shows an embodiment in which the two first lugs 210 are provided and one groove 211 is provided on each of the two first lugs 210, those skilled in the art should understand that the present application is not limited thereto. The number of the first lugs 210 may be one or more, a plurality of grooves 211 may be provided on each of the first lugs 210, and the number of the grooves 211 on each of the first lugs 210 may be the same or different. The groove 211 is configured to have a depth at which the magnetic component 400 and the metal component 500 abut against each other within the groove 211, that is, the magnetic component 400 and the metal component 500 are in contact with each other in the groove 211, so that the groove 211 limits positions where the magnetic component 400 and the metal component 500 are located, thereby preventing an offset between the magnetic component 400 and the metal component 500.

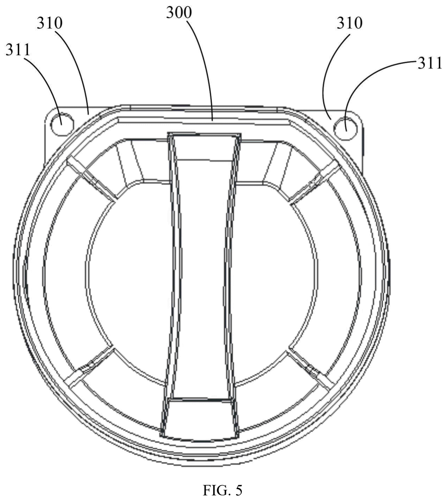

Referring to FIG. 5, the second cover 300 is configured to be mounted on the second port 120, and two second lugs 310 are respectively arranged on opposite sides of the second cover 300. One of the magnetic component 400 and the metal component 500 is disposed on each of the two second lugs 310. The other of the magnetic component 400 and the metal component 500 is disposed on a top surface 1221 of the second boss 122 and protrudes from the top surface 1221, so that an abutment may be established between the magnetic component 400 and the metal component 500. The second lug 310 is provided with a groove 311 on its side facing the second boss 122 for accommodating one of the magnetic component 400 and the metal component 500. The side of the second lug 310 facing the second boss 122 is configured to be form-fitted with the top surface 1221 of the second boss 122, which facilitates mounting the second cover 300 into the second port 120 and establishing the abutment between the magnetic component 400 and the metal component 500.

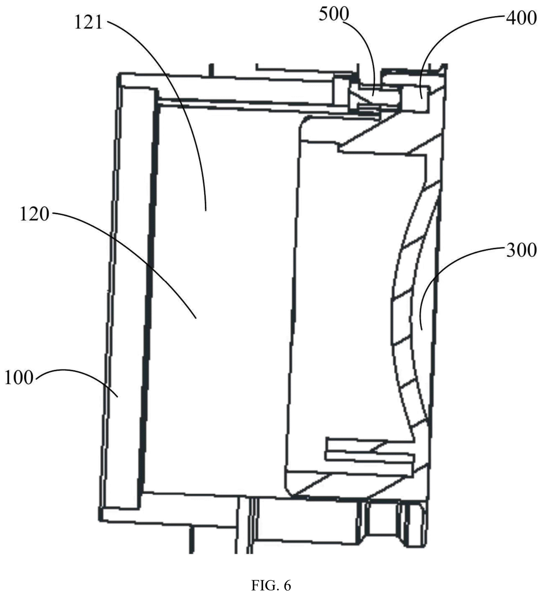

Although FIG. 5 shows an embodiment in which the two second lugs 310 are provided and one groove 311 is provided on each of the two second lugs 310, those skilled in the art should understand that the present application is not limited thereto. The number of the second lugs 310 may be one or more, a plurality of grooves 311 may be provided on each of the second lugs 310, and the number of grooves 311 on each of the second lugs 310 may be the same or different. The groove 311 is configured to have a depth at which the magnetic component 400 and the metal component 500 abut against each other within the groove 311 (see FIG. 6), that is, the magnetic component 400 and the metal component 500 are in contact with each other in the groove 311, so that the groove 311 limits positions where the magnetic component 400 and the metal component 500 are located, thereby preventing an offset between the magnetic component 400 and the metal component 500.

The magnetic component 400 may be disposed on one of the first boss 112 and the first cover 200, and accordingly the metal component 500 is disposed on the other of the first boss 112 and the first cover 200, so that the first cover 200 is mounted on the first port 110 with the assistance of a magnetic attraction force between the magnetic component 400 and the metal component 500. For the sake of brevity, FIGS. 2, 3 and 6 only show an embodiment in which the magnetic component 400 is disposed on the first cover 200 and accordingly the metal component 500 is disposed on the first boss 112. More specifically, the magnetic component 400 is disposed in the groove 211 of each of the two first lugs 210. Two first bosses 112 are respectively arranged on opposite sides of the inner wall 111 of the first port 110. Although FIGS. 2, 3 and 6 show an embodiment in which two first bosses 112 are provided and each of the first bosses 112 is provided with one metal component 500, those skilled in the art should understand that the present application is not limited thereto. The number of the first bosses 112 may be one or more, a plurality of metal components 500 may be provided on each of the first bosses 112, and the number of metal components 500 on each of the first bosses 112 may be the same or different. The first cover 200 is provided with a plurality of corresponding magnetic components 400 at corresponding positions respectively, so that the plurality of magnetic components 400 and the plurality of metal components 500 are in one-to-one correspondence and aligned with each other when the first cover 200 is mounted on the first port 110.

The arrangement of the one-to-one correspondence and alignment between the magnetic components 400 and the metal components 500 on the first cover 200 and the first port 110 enables the first cover 200 to be more firmly mounted on the first port 110 through the magnetic attraction force, and enables that there is a certain holding force between the first cover 200 and the first port 110 when the first cover 200 is inserted into the first port 110 and when the first cover 200 is pulled out or removed from the first port 110. As a result, there is no need to mount a sealing ring on a side wall of the first cover 200 to achieve an interference fit between the sealing ring and a side wall of the first port 110 to obtain the holding force, which avoids deformation of the first cover 200 or wear of the sealing ring caused by the interference fit after a large number of insertions and removals of the first cover 200, avoids the regular replacement of the first cover 200 or the sealing ring, reduces the usage cost of the charging dock 1000 and the electric vehicle, and improves the durability of the charging dock 1000.

The magnetic component 400 may be disposed on one of the second boss 122 and the second cover 300, and accordingly the metal component 500 is disposed on the other of the second boss 122 and the second cover 300, so that the second cover 300 is mounted on the second port 120 with the assistance of the magnetic attraction force between the magnetic component 400 and the metal component 500. For the sake of brevity, FIGS. 2, 3 and 6 only show an embodiment in which the magnetic component 400 is disposed on the second cover 300 and accordingly the metal component 500 is disposed on the second boss 122. More specifically, the magnetic component 400 is disposed in the groove 311 of each of the two second lugs 310. Two second bosses 122 are respectively arranged on opposite sides of the inner wall 121 of the second port 120. Although FIGS. 2, 3 and 6 show an embodiment in which two second bosses 122 are provided and each of the second bosses 122 is provided with one metal component 500, those skilled in the art should understand that the present application is not limited thereto. The number of the second bosses 122 may be one or more, a plurality of metal components 500 may be provided on each of the second bosses 122, and the number of metal components 500 on each of the second bosses 122 may be the same or different. The second cover 300 is provided with a plurality of corresponding magnetic components 400 at corresponding positions, so that the plurality of magnetic components 400 and the plurality of metal components 500 are in one-to-one correspondence and aligned with each other when the second cover 300 is mounted on the second port 120 (see FIG. 6).

The arrangement of the one-to-one correspondence and alignment between the magnetic components 400 and the metal components 500 on the second cover 300 and the second port 120 enables the second cover 300 to be more firmly mounted on the second port 120 through the magnetic attraction force, and enables that there is a certain holding force between the second cover 300 and the second port 120 when the second cover 300 is inserted into the second port 120 and when the second cover 300 is pulled out or removed from the second port 120. As a result, there is no need to mount a sealing ring on a side wall of the second cover 300 to achieve an interference fit between the sealing ring and a side wall of the second port 120 to obtain the holding force, which avoids deformation of the second cover 300 or wear of the sealing ring caused by the interference fit after a large number of insertions and removals of the second cover 300, avoids the regular replacement of the second cover 300 or the sealing ring, reduces the usage cost of the charging dock 1000 and the electric vehicle, and improves the durability of the charging dock 1000.

So far, the embodiments of the present application have been described in detail with reference to the drawings. It should be noted that the implementations not shown or described in the drawings or the text of the specification are all known to those of ordinary skill in the art and are not described in detail. In addition, the above definition of each of components is not limited to various specific structures, shapes or manners mentioned in the embodiments, and those of ordinary skill in the art may make simple changes or substitutions.

It should also be noted that, in the specific embodiments of the present application, the numerical parameters in this specification and the appended claims are approximate values and may be changed according to the desired characteristics obtained by the content of the present application, unless otherwise specified. In detail, all numbers expressing dimensions, ranges, and so forth used in the specification and the claims are to be understood as being modified in all instances by the term "about." In general, the expressed meaning of numbers is intended to encompass a variation of ± 10% from a specified amount in some embodiments, a variation of ± 5% from a specified amount in some embodiments, a variation of ± 1% from a specified amount in some embodiments, and a variation of ± 0.5% from a specified amount in some embodiments.

Those skilled in the art will appreciate that various combinations and/or assemblies of features recited in the various embodiments and/or claims of the present application may be made, even if such combinations and/or assemblies are not explicitly recited in the present application. In particular, various combinations and/or assemblies of features described in various embodiments and/or claims of the present application may be made without departing from the spirit and teachings of the present application. All such combinations and/or assemblies fall within the scope of the present application.

The specific embodiments described above provide further detailed explanations of the objects, technical solutions, and beneficial effects of the present application. It should be understood that the above description is only the specific embodiments of the present application and is not intended to limit the present application. Any modifications, equivalent substitutions, improvements, etc. made within the spirit and principles of the present application should fall within the protection scope of the present application.

## Claims

1. A charging dock for an electric vehicle, **characterized by** comprising:
a housing provided with a port for accommodating charging terminals, the port being provided with a boss on an inner wall thereof;
a cover configured to be mounted on the port;
a magnetic component disposed on one of the boss and the cover; and
a metal component disposed on the other of the boss and the cover, so that the cover is mounted on the port with an assistance of a magnetic attraction force between the magnetic component and the metal component.

2. The charging dock according to claim 1, **characterized in that**,
the cover is provided with a lug, and one of the magnetic component and the metal component is disposed on the lug.

3. The charging dock according to claim 2, **characterized in that**,
the lug is provided with a groove on its side facing the boss for accommodating the one of the magnetic component and the metal component.

4. The charging dock according to claim 3, **characterized in that**,
the other of the magnetic component and the metal component is disposed on and protrudes from a top surface of the boss.

5. The charging dock according to claim 4, **characterized in that**,
the groove is configured to have a depth at which the magnetic component and the metal component abut against each other within the groove.

6. The charging dock according to claim 4 or 5, **characterized in that**,
the side of the lug facing the boss is configured to be form-fitted with the top surface of the boss.

7. The charging socket according to claim 6, **characterized in that** the port comprises:
a first port provided with two first bosses respectively arranged on opposite sides of an inner wall thereof; and
a second port provided with two second bosses respectively arranged on opposite sides of an inner wall thereof,
wherein the metal component is disposed on each of the two first bosses and the two second bosses.

8. The charging dock of claim 7, **characterized in that** the cover comprises:
a first cover configured to be mounted on the first port and provided with two first lugs respectively arranged on opposite sides thereof; and
a second cover configured to be mounted on the second port and provided with two second lugs respectively arranged on opposite sides thereof,
wherein the magnetic component is disposed in the groove of each of the two first lugs and the two second lugs.

9. The charging dock according to any one of claims 1 to 5 and 7 to 8, **characterized in that** the magnetic component comprises a neodymium-iron-boron magnet.

10. A cable assembly **characterized by** comprising the charging dock according to any one of claims 1 to 9 and a cable connected to the charging dock.
